# NEUE EUROPÄISCHE PATENTSCHRIFT

(11) **EP 1 698 514 B2**
(45) Veröffentlichungstag und Bekanntmachung des Hinweises auf die Entscheidung über den Einspruch: **17.06.2015**
(45) Hinweis auf die Patenterteilung: 14.09.2011
(21) Anmeldenummer: 06110615.9
(22) Anmeldetag: 03.03.2006
(51) Int. Cl.: B60Q 1/26

(54) **Leuchte für Fahrzeuge**
Vehicle lamp
Feu pour véhicule

(30) Priorität: 05.03.2005 DE 102005010188
(43) Veröffentlichungstag der Anmeldung: 06.09.2006
(73) Patentinhaber: Hella KGaA Hueck & Co., 59552 Lippstadt (DE)
(72) Erfinder: Hüwel, Frank, 34431, Marsberg (DE); Berghoff, Wolfgang, 59609, Anröchte (DE); Kathmann, Joachim, 59555, Lippstadt (DE)
(74) Vertreter: Ostermann, Thomas

(56) Entgegenhaltungen:
- EP-A1- 0 357 973
- DE-A1- 10 036 402
- DE-A1- 19 920 703
- DE-C1- 19 815 709
- DE-U1- 20 110 842
- FR-A1- 2 716 416
- FR-A1- 2 832 482
- FR-A1- 2 833 660
- GB-A- 2 305 495
- JP-A- 58 110 332

## Beschreibung

Die Erfindung betrifft eine Leuchte für Fahrzeuge nach dem Oberbegriff des Patentanspruchs 1.

Aus der EP 0 993 988 A2 ist eine Leuchte für Fahrzeuge mit einem Gehäuse bekannt, wobei an einer Rückseite des Gehäuses Rasthaken als Befestigungsmittel vorgesehen sind, die eine Karosserieöffnung des Fahrzeugs im Montagezustand der Leuchte hintergreifen. Zur Abdichtung der Leuchte an dem Karosserieteil ist ein umlaufendes Dichtungselement vorgesehen, das sich unter Eindrücken eines von dem Wandungsteil der Leuchte abragenden Steges zwischen demselben und dem Karosserieteil erstreckt. Nachteilig an der bekannten Leuchte ist, dass durch das punktuelle Einpressen des Wandungsteilsteges in das Dichtungselement eine Materialermüdung einhergehen kann, so dass die Abdichtwirkung reduziert wird.

Aus der DE 199 43 134 A1 ist eine Leuchte für Fahrzeuge mit einem Gehäuse bekannt, das auf einer Rückseite des Gehäuses über Schraubbefestigungsmittel mit einem Karosserieteil des Fahrzeugs verbunden ist. Das Gehäuse weist in einem hinteren Randbereich einen umlaufenden abragenden Wandungsabschnitt auf, dessen freies Ende über ein umlaufendes Dichtungselement an einem Karosserieteil des Fahrzeugs abgedichtet ist. Das Dichtungselement ist als ein Heißfixierungsharzschaum ausgebildet, der durch Spritzen auf das freie Ende des Wandungsteils der Leuchte aufgebracht wird. Nachteilig an der bekannten Leuchte ist, dass die Abdichtwirkung durch Flächenpressung in besonderen Umgebungsbedingungen nicht ausreichend ist.

Aus der DE 100 36 402 A1 ist eine Leuchte für Fahrzeuge bekannt ist, die in der Einbaulage über ein geschlossenes Dichtungselement gegenüber einem Karosserieteil des Fahrzeugs abgedichtet gelagert ist. Das Dichtungselement weist auf einer dem Karosserieteil zugewandten ersten Fläche eine erste Klebeschicht und auf einer der Leuchte zugewandten zweiten Fläche eine zweite Klebeschicht auf, so dass durch Verklebung ein Dichtschluss zwischen der Leuchte und dem Karosserieteil gegeben ist. Die Klebeschichten sind auf die Materialien der Leuchte bzw. des Karosserieteils optimiert, so dass eine besonders feste Verbindung zwischen dem Dichtelement einerseits und der Leuchte und dem Karosserieteil andererseits gegeben ist.

Aufgabe der vorliegenden Erfindung ist es daher, eine Leuchte für Fahrzeuge derart weiterzubilden, dass eine verbesserte Abdichtwirkung insbesondere zur Vermeidung des Eindringens von Wasser in den Bereich in bzw. auf einer Karosserieöffnung des Fahrzeugs montierten Leuchte gewährleistet ist, wobei insbesondere die Demontage der Leuchte erleichtert wird.

Zur Lösung dieser Aufgabe weist die Erfindung die Merkmale des Patentanspruchs 1 auf.

Die Erfindung ermöglicht durch das Vorsehen einer ersten Klebeschicht zwischen einer Fläche des Dichtungselementes und einem Karosserieteil des Fahrzeugs einerseits und einer zweiten Klebeschicht zwischen einer Fläche des Dichtungselementes und einem Wandungsteil der Leuchte andererseits eine verbesserte Haftwirkung, so dass der Abdichtungsgrad erhöht werden kann. Durch das zusätzliche Verkleben des Dichtungselementes an dem Wandungsteil bzw. Karosserieteil kann insbesondere das Eindringen eines unter einem hohen Druck stehenden Wasserstrahls verhindert werden. Nach der Erfindung sind eine erste Klebeschicht und eine zweite Klebeschicht flächig auf jeweils einer ersten Fläche bzw. zweiten Fläche des Dichtungselementes aufgebracht. Vorteilhaft kann hierdurch ohne das Vorsehen von spitz zulaufenden Stegen eine flächige Verbindung zwischen dem Dichtungselement und dem Wandungsteil der Leuchte einerseits und dem Dichtungselement und dem Karosserieteil andererseits erzielt werden. Ferner kann dadurch, dass die Lichtscheibe auf einer dem Gehäuse zugewandten Seite einen umlaufenden Steg im Randbereich aufweist, das Ansetzen des Dichtungselements unter Anlage einer Querseite desselben an den Steg an den Randabschnitt der Lichtscheibe vereinfacht werden.

Gemäß der Erfindung weist die von der ersten Klebeschicht, die auf einer dem Karosserieteil zugewandten Seite des Dichtungselementes angeordnet ist, eine höhere Haftkraft auf als die zweite Klebeschicht, die auf einer dem Wandungsteil der Leuchte zugewandten Seite des Dichtungselementes angeordnet ist. Hierdurch lassen sich die Abzugseigenschaften des Dichtungselementes bei Demontage der Leuchte beeinflussen. Erleichternd wirkt sich dadurch aus, dass bei Demontage der Leuchte das Dichtungselement am Karosserieteil verbleibt, so dass es anschließend leicht entfernt werden kann.

Nach einer Weiterbildung der Erfindung ist die zweite Klebeschicht, die sich zwischen dem Dichtungselement und einem Randabschnitt einer Lichtscheibe der Leuchte erstreckt, als transparenter Klebstoff ausgebildet, so dass von der zweiten Klebeschicht keine störende Wirkung auf das Design der Leuchte bzw. während des Betriebs der Leuchte ausgeübt kann.

Nach einer Weiterbildung der Erfindung ist vorgesehen, dass das Dichtungselement bereits bei der Herstellung der Leuchte auf ein entsprechendes Wandungsteil mittels einer zweiten Klebeschicht aufgeklebt werden kann. Auf einer dem Wandungsteil abgewandten ersten Fläche des Dichtungselementes ist die erste Klebeschicht aufgebracht und durch eine Abdeckfolie abgedeckt. Durch Abziehen der Abdeckfolie von dem Dichtungselement unmittelbar vor Montage der Leuchte an dem Karosserieteil wird die erste Klebeschicht freigelegt, so dass eine feste Verbindung des Dichtungselementes an dem Karosserieteil gewährleistet ist. Der zusätzliche Montageaufwand zur Verbesserung der Abdichtwirkung kann hierdurch begrenzt werden.

Anspruch 5 beschreibt eine Weiterbildung der Erfindung.

Der auf der ersten Klebeschicht aufgebrachte und Abziehfolie oder der vor der Montage des Dichtungselementes auf der Leuchte auf der zweiten Klebeschicht aufgebrachten Abziehfolie ist ein überstehender Folienrand zugeordnet, der zum manuellen Erfassen der Abziehfolie dient und das Abziehen der Abziehfolie erleichtert. Zudem sind die Folien farblich unterschiedlich, was die Erkennung des Klebers bei der Leuchten- bzw. Fahrzeugmontage erleichtert.

Ein Ausführungsbeispiel der Erfindung wird nachfolgend anhand der Zeichnungen näher erläutert.

Es zeigen:
- Figur 1: einen Vertikalschnitt durch eine in einer Karosserieöffnung eines Fahrzeugs montierten Leuchte,
- Figur 2: eine Draufsicht auf ein Dichtungselement, das in einem ersten Mon- tageschritt an der Leuchte und in einem zweiten Montageschritt an dem Karosserieteil angebracht wird,
- Figur 3: einen Schnitt durch das Dichtungselement gemäß der Linie III-III in Figur 2 und
- Figur 4: einen Schnitt durch das Dichtungselement entlang der Linie IV-IV in Figur 2.

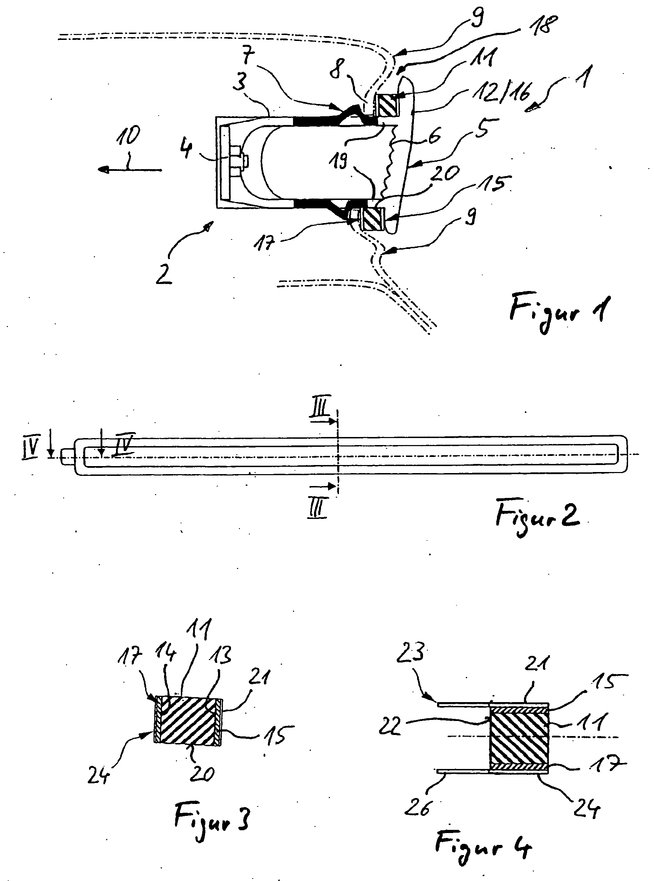

In Figur 1 ist eine Leuchte 1, vorzugsweise eine Zusatzbremsleuchte, dargestellt, die in einer rückseitig des Fahrzeugs angeordneten Karosserieöffnung 2 montiert ist.

Die Leuchte 1 besteht im Wesentlichen aus einem Gehäuse 3, in dem mindestens eine Lichtquelle 4 (Leuchtdiode LED) angeordnet ist, und einer die Gehäuseöffnung abdeckenden Lichtscheibe 5. Die Lichtscheibe 5 ist vorzugsweise rot eingefärbt und weist auf einer Innenseite Optikelemente 6 zur Streuung des von der Lichtquelle 4 emittierten Lichtes auf.

Zur lösbaren Befestigung der Leuchte 1 in der Karosserieöffnung 2 sind als Befestigungsmittel Rastfedern 7 vorgesehen, die beim Einsetzen der Leuchte 1 in die Karosserieöffnung 2 einen Öffnungsrand 8 eines Karosserieteils 9 des Fahrzeugs hintergreifen und quer zur Montagerichtung 10 eine Haltekraft auf die freien Enden des Öffnungsrandes 8 ausüben.

Alternativ können die Befestigungsmittel auch als Schraubverbindung ausgebildet sein, wobei das Gehäuse 3 der Leuchte 1 in einem rückseitigen Bereich durch Verschraubung mit dem eine muldenförmige Karosserieöffnung bildenden Karosserieteil 9 verbunden ist.

Zur Abdichtung der Leuchte 1 relativ zu dem Karosserieteil 9 ist ein umlaufendes elastisches Dichtungselement 11 vorgesehen, das in der Montagestellung der Leuchte 1 zwischen einem Wandungsteil 12 der Leuchte 1 und dem Karosserieteil 9 des Fahrzeugs zusammengepresst ist. Hierzu ist die Dicke des Dichtungselementes 11 derart gewählt, dass eine dem Wandungsteil 12 zugewandte zweite Fläche 13 sowie eine dem Karosserieteil 9 zugewandte erste Fläche 14 des Dichtungselementes 11 bei Verrastung der Rastfeder 7 aufeinander zugedrückt werden. Zur Erhöhung der Dichtwirkung ist die zweite Fläche 13 des Dichtungselementes 11 über eine zweite Klebeschicht 15 haftend mit einem rückseitig der Lichtscheibe 5 angeordneten Randabschnitt 16 (Wandungsteil 12) der Lichtscheibe 5 verbunden. Die erste Fläche 14 des Dichtungselementes 11 ist über eine erste Klebeschicht 17 haftend mit dem Offnungsrand 8 des Karosserieteils 9 verbunden. Hierdurch wird eine verbesserte Dichtwirkung erzielt, die ein Eindringen von insbesondere Wasserstrahlen hohen Drucks in den Innenraum der Leuchte 1 verhindern.

Da eine bessere Zugänglichkeit der ersten Klebeschicht 17 in Folge des Ausbilden eines Spaltes 18 zwischen der Lichtscheibe 5 und dem Karosserieteil 9 im Vergleich zur zweiten Klebeschicht 15 gegeben ist, kann es vorgesehen sein, dass die Haftwirkung der zweiten Klebeschicht 15 kleiner ist als die Haftwirkung der ersten Klebeschicht 17.

Dadurch, dass die Lichtscheibe 5 auf einer dem Gehäuse 3 zugewandten Seite einen umlaufenden Steg 19 im Randbereich aufweist, kann das Ansetzen des Dichtungselementes 11 an den Randabschnitt 16 der Lichtscheibe 5 vereinfacht werden. Das Dichtungselement 11 kann unter Anlage einer Querseite 20 desselben an den Steg 19 auf den Randabschnitt 16 der Lichtscheibe 5 aufgeklebt werden. Vorzugsweise wird das Dichtungselement 11 auf den Randabschnitt 16 der Lichtscheibe 5 gelegt und dann durch Abziehen einer auf der zweiten Klebeschicht 15 anliegenden Abdeckfolie 21 das Dichtungselement 11 haftend an der Lichtscheibe 5 angebracht. Somit kann das Dichtungselement 11 eindeutig an dem Randabschnitt 16 der Lichtscheibe 5 positioniert werden.

Die zweite Klebeschicht 15 und die erste Klebeschicht 17 sind vorzugsweise als ein Acrylatdispersions-Klebstoff ausgebildet. Zumindest die zweite Klebeschicht 15 ist vorzugsweise transparent ausgebildet, so dass keine störenden Wirkungen auf das Design der Leuchte bzw. auf den Betrieb derselben erfolgen können.

Das Dichtungselement 11 besteht vorzugsweise aus einem Gummimaterial.

In den Figuren 2, 3 und 4 ist der Aufbau des Dichtungselementes 11 dargestellt, bevor es mit der Leuchte 1 bzw. dem Karosserieteil 9 verbunden wird. In einem ersten Montageschritt wird das Dichtungselement 11 entlang des Randabschnittes 16 der Lichtscheibe 5 angelegt. Nachfolgend wird die auf der zweiten Klebeschicht 15 aufgebrachte Abdeckfolie 21 entfernt. Zum erleichterten Entfernen der Abdeckfolie 21 weist diese einen über den Rand 22 des Dichtungselementes 11 bzw. der ersten zweiten 15 hinausragenden Folienrand 23 auf, der als Abziehhilfe dient. Nach Entfernen der Abdeckfolie 21 liegt das Dichtungselement 11 haftend über der zweiten Klebeschicht 15 an dem Randabschnitt 16 der Lichtscheibe 5 an. Dieser Montageschritt kann in den Herstellungsprozess der Leuchte 1 integriert sein.

Die dem Randabschnitt 16 der Lichtscheibe 5 abgewandte erste Klebeschicht 17 des Dichtungselementes 11 ist mit einer weiteren Abdeckfolie 24 bedeckt, so dass die ersten Klebeschicht 17 bis zur Montage der Leuchte in der Karosserieöffnung 2 geschützt ist. Die weitere Abdeckfolie 24 weist ebenfalls einen über einen Rand 22 des Dichtungselementes 11 bzw. der ersten Klebeschicht 17 hinausragenden Folienrand 26 auf, der als Abziehhilfe dient. Sobald die Abdeckfolie 24 von dem Dichtungselement 11entfernt worden ist, kann die Leuchte 1 in die Karosserieöffnung 2 eingesetzt, verrastet und durch Anlage der ersten Klebeschicht 17 an den Öffnungsrand 8 des Karosserieteils 9 fest mit demselben verbunden werden.

Zur Demontage der Leuchte 1 wird die Rastverbindung 7 entriegelt. Nachfolgend wird mittels eines Lacks schonenden Hilfswerkzeugs das Dichtungselement 11 von der Lichtscheibe 5 entfernt, so dass im Anschluss die Leuchte 1 aus der Karosserieöffnung 2 entnommen werden kann. Weil die zweite Klebeschicht 15 eine geringere Haftwirkung als die erste Klebeschicht 17 hat, kann sichergestellt werden, dass die Leuchte 1 unter Verbleib des Dichtungselementes 11 an dem Karosserieteil 9 entfernt wird. In einem weiteren Arbeitsschritt kann dann das Dichtungselement 11 von dem Randabschnitt 16 des Karosserieteils 9 entfernt werden. Sofern die Leuchte 1 bei der Demontage nicht beschädigt worden ist, kann sie mit einem neuen Dichtungselement 11 versehen und wieder in die Karosserieöffnung des Fahrzeugs 2 montiert werden.

## Patentansprüche

1. System, bestehend aus Karosserieteil, Leuchte für Fahrzeuge und Dichtungselement, wobei die Leuchte zur Anordnung in einer Karosserieöffnung des Karosserieteils (9) des Fahrzeugs mit demselben über Befestigungsmittel (7) verbindbar ist, so dass zwischen einem Wandungsteil (12) der Leuchte (1) und dem Karosserieteil (9) ein Dichtungselement (11) angeordnet ist, dass das Dichtungselement (11) als ein elastisches Dichtungselement (11) ausgebildet ist, auf dessen erster Fläche (14) eine erste Klebeschicht (17) und auf dessen zweiter Fläche (13) eine zweite Klebeschicht (15) aufgebracht ist, wobei die erste Fläche (14) des Dichtungselementes (11) über die erste Klebeschicht (17) haftend an einem Öffnungsrand (8) des Karosserieteils (9) anbringbar ist und wobei die zweite Fläche (13) des Dichtungselementes (11) über die zweite Klebeschicht (15) haftend an einem Randabschnitt (16) des als Lichtscheibe (5) ausgebildeten Wandungsteils (12) angebracht ist, **dadurch gekennzeichnet, dass** das Dichtungselement (11) lang gestreckt ausgebildet ist unter Anlage einer Querseite (20) desselben an einem aus der Erstreckungsebene der Lichtscheibe (5) abragenden Stegs (19) umlaufend an der Lichtscheibe (5) angeordnet ist, wobei die erste Klebeschicht (17) und die zweite Klebeschicht (15) derart ausgebildet sind, dass die an den Karosserieteil (9) wirkende Haftkraft der ersten Klebeschicht (17) größer ist als die an dem Randabschnitt (16) der Lichtscheibe (5) wirkende Haftkraft der zweiten Klebeschicht (15).

2. System nach Anspruch 1, **dadurch gekennzeichnet, dass** ein Gehäuse (3) der Leuchte (1) durch Verrastung (7) und/oder Verschraubung in der Karosserieöffnung (2) an dem Karosserieteil (9) befestigbar ist.

3. System nach einem der Ansprüche 1 oder 2, **dadurch gekennzeichnet, dass** die auf der ersten Fläche (14) des Dichtungselements (11) aufgebrachte erste Klebeschicht (17) durch eine für die Montage der Leuchte (1) an dem Karosserieteil (9) abziehbare Abdeckfolie (21) abgedeckt ist.

4. System nach Anspruch 3, **dadurch gekennzeichnet, dass** die Abdeckfolie (21, 24) mit einem über einen Rand (22) der Klebeschicht (15,17) hinausragenden Folienrand (23, 26) versehen ist.

## Claims

1. System consisting of a vehicle body portion (9), a vehicle lamp and a sealing element (11), wherein the vehicle lamp is adapted to be arranged in an opening of the vehicle body portion (9) and to be connected thereto with the aid of a fixing means (7) such that between a wall portion (12) of the lamp (1) and said body portion (9) there is a sealing element (11) provided which is a flexible element (11) to a first surface (14) of which a first adhesive layer (17) and to a second surface (13) of which a second adhesive layer are applied wherein said first surface (14) of the sealing element (11) can be bonded to a marginal edge (8) of said opening of the body portion (17) via said first adhesive layer (17) and wherein said second surface (13) of the sealing element (11) is via the second adhesive layer (15) bonded to a marginal portion (16) of a wall portion (12) provided in the form of a light disk (5), **characterized in that** the sealing element (11) is elongate and has one of its transversal sides (20) circumferentially contacting a web (19) that protrudes from the extension plane of said light disk (5), wherein first adhesive layer (17) and said second adhesive layer (15) are such that the adhesive strength of the first adhesive layer (17) that acts on said body portion (9) is higher than the adhesive strength of the second adhesive layer (15) that acts on the marginal edge portion (16) of the light disk (5).

2. System according to Claim 1, **characterized in that** a shell (3) of the lamp (1) can be attached to the body portion (9) either by locking or by screwing into the body opening (2).

3. System according to Claims 1 or 2, **characterized in that** the first adhesive layer (17) applied to the first surface (14) of the sealing element (11) is covered up with a masking tape (21) that can be removed for installing the lamp (1) to the body portion (9).

4. System according to Claim 3, **characterized in that** the masking tape (21, 24) has a marginal edge (23, 26) that protrudes beyond an edge (22) of the adhesive layer (15, 17).

## Revendications

1. Système constitué d'un élément de carrosserie (9), d'un feu pour véhicules automobiles et d'un joint d'étanchéité (11), sachant que le feu, pour l'insertion dans un orifice d'un élément de carrosserie (9) du véhicule, peut être raccordé audit élément avec des moyens de fixation (7), sachant qu'un joint d'étanchéité (11) est disposé entre une paroi (12) du feu (1) et l'élément de carrosserie (9), ledit joint d'étanchéité (11) étant réalisé sous la forme d'un élément d'étanchéité élastique (11), sur la première face (14) duquel est appliquée une première couche d'adhésif (17) et sur la deuxième face (13) duquel est appliquée une deuxième couche d'adhésif (15), sachant que la première face (14) de l'élément d'étanchéité (11) peut être fixée par adhérence, par l'intermédiaire de la première couche d'adhésif (17), sur un bord (8) de l'orifice de l'élément de carrosserie (9), et que la deuxième face (13) de l'élément d'étanchéité (11) peut être fixée par adhérence, par l'intermédiaire de la deuxième couche d'adhésif (15), sur une section marginale (16) de la paroi (12), qui est réalisée sous la forme d'une glace de feu (5), **caractérisé en ce que** l'élément d'étanchéité (11) est de forme allongée et est agencé, sur la périphérie de la paroi (12), une face transversale (20) dudit élément d'étanchéité portant contre une pièce (19), qui est en saillie du plan d'extension de la glace de feu (5), sachant que la première couche d'adhésif (17) et la deuxième couche d'adhésif (15) sont réalisées de sorte que la force d'adhérence de la première couche d'adhésif (17), exercée sur l'élément de carrosserie (9), est plus élevée que la force d'adhérence de la deuxième couche d'adhésif (15), exercée sur la section marginale (16) de la glace de feu (5).

2. Système selon la revendication 1, **caractérisé en ce qu'**un boîtier (3) du feu (1) peut être fixé à l'élément de carrosserie (9) par enclenchement (7) et / ou par vissage dans l'orifice (2) de la carrosserie.

3. Système selon l'une des revendications 1 ou 2, **caractérisé en ce que** la première couche d'adhésif (17), appliquée sur la première face (14) de l'élément d'étanchéité (11), est recouverte par un film pelable (21), qui peut être enlevé lors du montage du feu (1) sur l'élément de carrosserie (9).

4. Système selon la revendication 3, **caractérisé en ce que** le film pelable (21, 24) est pourvu d'un bord (23, 26), qui est en saillie du bord (22) de la couche d'adhésif (15, 17).
